# EUROPÄISCHE PATENTSCHRIFT

(11) **EP 1 819 953 B1**
(45) Veröffentlichungstag und Bekanntmachung des Hinweises auf die Patenterteilung: **28.10.2009**
(21) Anmeldenummer: 05742948.2
(22) Anmeldetag: 19.05.2005
(51) Int. Cl.: F16K 27/10, B23P 13/00

(54) **VERFAHREN ZUR HERSTELLUNG EINES DRUCKTRAGENDEN BAUTEILS**
METHOD FOR THE PRODUCTION OF A PART BEARING PRESSURE
PROCEDE DE FABRICATION D'UN COMPOSANT SUPPORTANT UNE PRESSION

(30) Priorität: 29.11.2004 DE 102004057682
(43) Veröffentlichungstag der Anmeldung: 22.08.2007
(73) Patentinhaber: Daume Regelarmaturen GmbH, 30916 Isernhagen (DE)
(72) Erfinder: DAUME, Britta, 30161 Hannover (DE)
(74) Vertreter: Wagner, Carsten
(86) Internationale Anmeldenummer: PCT/EP2005/005449
(87) Internationale Veröffentlichungsnummer: WO 2006/058564

(56) Entgegenhaltungen:
- DD-A5- 291 401
- DE-C- 533 075
- DE-U1- 20 209 981
- FR-A- 1 104 746

## Beschreibung

Die Erfindung betrifft ein Verfahren zur Herstellung eines drucktragenden Bauteils mit einem Reduzierstück, insbesondere für Armaturen-, Pumpen-, Wärmetauscher-, Verteiler- und Filtergehäuse.

Derartige Bauteile finden in unterschiedlichen Bauformen aus verschiedenen Werkstoffen Verwendung. Ferner finden Armaturen- oder Filtergehäuse u. a. Einsatz im Vakuum-, kryotechnischen und Hochtemperaturbereich. Dabei sollen im kryotechnischen Einsatzbereich die Gehäuseteile möglichst gleichmäßige Wandungen aufweisen, wobei in der Kryotechnik häufig Bauteile mit einer Vakuumisolierung verwendet werden. Die Vakuumisolierung muß die Erzeugung und Aufrechterhaltung des Vakuums gewährleisten, so daß nur drucktragende Bauteile aus diffusionsdichten Werkstoffen (geschmiedet, gepresster Werkstoff; sauber) verwendet werden können.

An diese drucktragenden Bauteile sind je nach Einsatzgebiet sicherheitstechnisch hohe Anforderungen zu stellen. Wird beispielsweise eine Stellarmatur für ein Kraftwerk verwendet, unterliegt das drucktragende Armaturengehäuse den Richtlinien gemäß TRD oder CE-Norm AD-2000. Damit die drucktragenden Bauteile diesen Anforderungen genügen, müssen an kritischen Stellen zerstörungsfreie Überprüfungen, z. B. mittels Röntgen, Ultraschall oder durch Rissprüfungen erfolgen, um sicherzustellen, daß keine Materialfehler vorliegen. Dabei ist die Durchführung der Überprüfung aufgrund der komplexen Geometrie der Bauteile aufwendig und zeitintensiv.

Es ist daher Aufgabe der Erfindung, ein Verfahren zur Herstellung eines drucktragenden Bauteiles mit einem Reduzierstück bereitzustellen, bei dem die Überprüfung auf Fehlerfreiheit vereinfacht ist.

Die Aufgabe der Erfindung wird gelöst durch ein Verfahren zur Herstellung eines drucktragenden Bauteils wie in Anspruch 1 definiert. Vorteilhafte Weiterbildungen finden sich in den abhängigen Ansprüchen.

Dabei wird der Rohling auf Fehlerfreiheit (Ungänzen) überprüft, bevor aus ihm ein Reduzierstück gefertigt wird. Da der Rohling selbst eine einfache Geometrie aufweist, kann die Überprüfung des Rohlings auf Fehlerfreiheit einfach durchgeführt werden.

Vorzugsweise ist dabei vorgesehen, daß der Rohling ein Abschnitt eines Rohres oder ein Schmiederohling ist, aus dem mittels Drehen, Fräsen oder Schmieden das Reduzierstück gefertigt wird.

Die Überprüfung des Rohlings auf Fehlerfreiheit (Ungänzen) erfolgt mittels Verfahren zur zerstörungsfreien Werkstoffprüfung, vorzugsweise durch eine Ultraschall-Volumenprüfung unter Verwendung eines Senkrechtprüfkopfes.

Erfindungsgemäß ist vorgesehen, daß das Reduzierstück mit einem Krümmer versehen wird, wobei es sich bei dem Krümmer vorzugsweise um einen 90°-Krümmer handelt. Es können jedoch auch andere Krümmer verwendet werden. Dabei ist der Krümmer an der Stelle mit dem kleineren Durchmesser mit dem Reduzierstück verbunden.

Die Verbindung zwischen dem Reduzierstück und dem Krümmer kann beispielsweise mittels Verschraubung oder anderer geeigneter Verbindungsmittel erfolgen. Jedoch ist vorzugsweise vorgesehen, daß die Verbindung zwischen dem Reduzierstück und dem Krümmers durch Schweißen hergestellt wird.

Diese durch Schweißen hergestellte Verbindung zwischen dem Reduzierstück und dem Krümmer kann mittels Verfahren zur zerstörungsfreien Werkstoffprüfung, vorzugsweise durch eine Ultraschall-Volumenprüfung unter Verwendung eines Senkrechtprüfkopfes erfolgen.

In einer weiteren Ausführungsform ist vorgesehen, daß der Krümmer und das Reduzierstück mit einem T-Stück verbunden werden, wobei das T-Stück mit dem Abschnitt mit einem größeren Durchmesser des Reduzierstückes verbunden wird, wobei der Krümmer in dem mittleren T-Stück aufgenommen ist.

Die Verbindung zwischen dem Krümmer und dem Reduzierstück kann auch vorzugsweise mittels Verfahren zur zerstörungsfreien Werkstoffprüfung, vorzugsweise durch eine Ultraschall-Volumenprüfung unter Verwendung eines Senkrechtprüfkopfes erfolgen.

Vorzugsweise ist vorgesehen, daß das Reduzierstück, der Krümmer oder das T-Stück aus elektroschlakkeumgeschmolzenem (ESU) Material gefertigt wird. Ein derartiges Material ist ein besonders reiner Stahl ohne Seigerungszonen, der besonders diffusionsdicht ist und sich daher besonders zur Verwendung im Bereich der Vakuumisolierung eignet.

Dabei ist vorzugsweise vorgesehen, daß das Material des Reduzierstückes oder des Krümmers oder das T-Stück geschmiedet oder verpreßt wird, so daß auf diese Weise ein Material mit einer hohen Diffusionsdichte verwedet wird.

In einer weiteren, bevorzugten Ausführungsform ist vorgesehen, daß das so gefertigte, drucktragende Bauteil mit einer Ummantelung versehen wird, sodaß das drucktragende Bauteil einen Doppelmantel aufweist, der beispielsweise auf Leckagen überwacht werden kann, sodaß ein derartiges drucktragenes Bauteil mit einer Ummantelung höchsten Sicherheitsanforderungen genügt.

Dabei können Verbindungsnähte der Ummantelung, die durch Zusammenfügen der Ummantelung entstehen und verschweißt wurden, mittels Verfahren zur zerstörungsfreien Werkstoffprüfung, vorzugsweise durch eine Ultraschall-Volumenprüfung unter Verwendung eines Senkrechtprüfkopfes erfolgen.

Vorzugsweise ist dabei vorgesehen, daß die zerstörungsfreie Werkstoffprüfung mittels einer Ultraschall-Volumenüberprüfung durchgeführt wird. Mit diesem Verfahren können nicht nur Risse an der Oberfläche erfaßt werden sondern auch Materialfehler im Inneren des Material erfaßt und lokalisiert sowie deren Größe auf einfache Weise bestimmt werden. Die Ultraschall-Volumenprüfung kann mittels verschiedener Ultraschallprüfköpfe erfolgen. Jedoch ist vorzugsweise vorgesehen, daß ein Senkrechtprüfkopf verwendet wird, der im rechten Winkel auf das zu prüfende Werkstück aufgesetzt wird. Mit einem solchen Senkrechtprüfkopf ist die Durchführung der Ultraschall-Volumenprüfung besonders einfach und schnell durchführbar.

Im folgenden wird die Erfindung anhand einer Zeichnung erläutert. Es zeigen:
- Fig. 1: in schematischer Darstellung ein geschlossenes Ventil,
- Fig. 2: in schematischer Darstellung ein geöffnetes Ventil,
- Fig. 3: einen Rohling,
- Fig. 4: ein Reduzierstück,
- Fig. 5: einen Krümmer,
- Fig. 6: einen mit dem Reduzierstück verbundenen Krümmer,
- Fig. 7: ein T-Stück,
- Fig. 8: ein mit dem Reduzierstück und dem Krümmer verbundenes T-Stück,
- Fig. 9: ein mit dem Reduzierstück und dem Krümmer verbundenes T-Stück in einer Ummantelung, und
- Fig. 10: ein zweites Ausführungsbeispiel eines Reduzierstückes mit Krümmer und T-Stück mit einer Ummantelung.

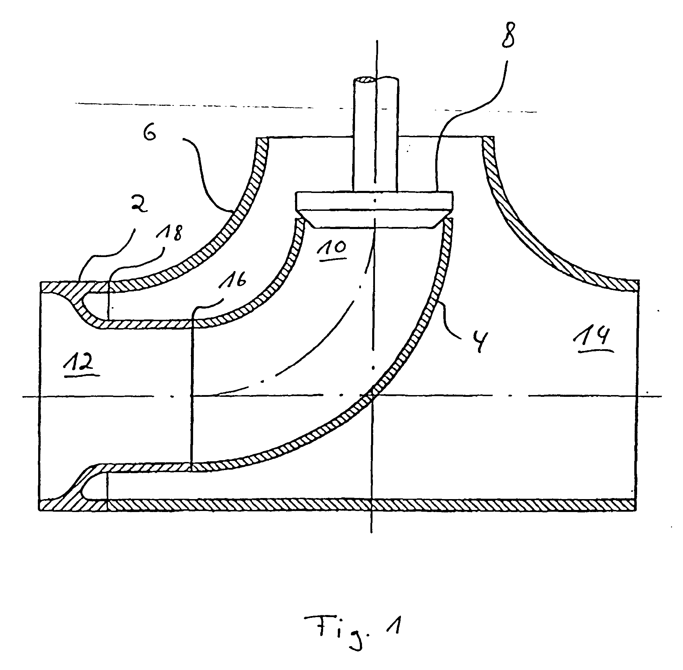

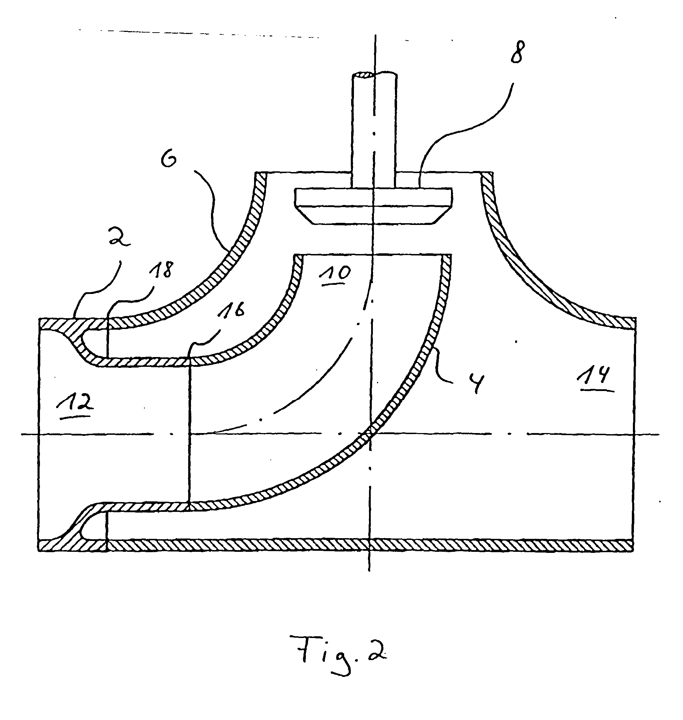

Es wird zunächst auf die Figuren 1 und 2 Bezug genommen. Gezeigt ist ein Ventil mit einem Eingang 12 und einem Ausgang 14, die an Rohrleitungen angeschlossen werden können. Der Eingang 12 und der Ausgang 14 des Ventils sind durch einen Strömungskanal miteinander verbunden, der mittels eines Ventilkegels 8 geöffnet und verschlossen werden kann, wobei die Ventilsteuerung zum Verschieben des Ventilkegels 8 zwischen der geöffneten und der geschlossenen Position nicht dargestellt ist.

Das Ventil selbst besteht aus einem Reduzierstück 2 zylindrischer Grundform, an das an einer Verbindungsstelle 16 ein Krümmer 4 angefügt ist. Das Krümmerende 10 am anderen Ende des Krümmers 4 kann mit dem Ventilkegel 8 geöffnet oder geschlossen werden.

Das Reduzierstück 2 bildet ferner den Eingang 12. Außerdem ist an dem Reduzierstück 2 an einer Verbindungsstelle 18 ein T-Stück 6 derart angefügt, daß der an dem Reduzierstück 2 angefügte Krümmer 4 im Inneren des T-Stücks 6 angeordnet ist.

Somit kann ein Stoffstrom bei geöffnetem Ventilkegel 8 durch den Eingang 12 zum Krümmerende 10 des Krümmers 4 entlang und dann weiter durch das Innere des T-Stücks 6 zum Ausgang 12 weiterstömen.

Dabei sind das Reduzierstück 2, der Krümmer 4 und das T-Stück 6 aus einem hochreinen Stahl gefertigt, der keine Seigerungszonen aufweist und beispielsweise elektroschlackeumgeschmolzen (ESU) ist, wobei das Material anschließend geschmiedet oder verpreßt wurde.

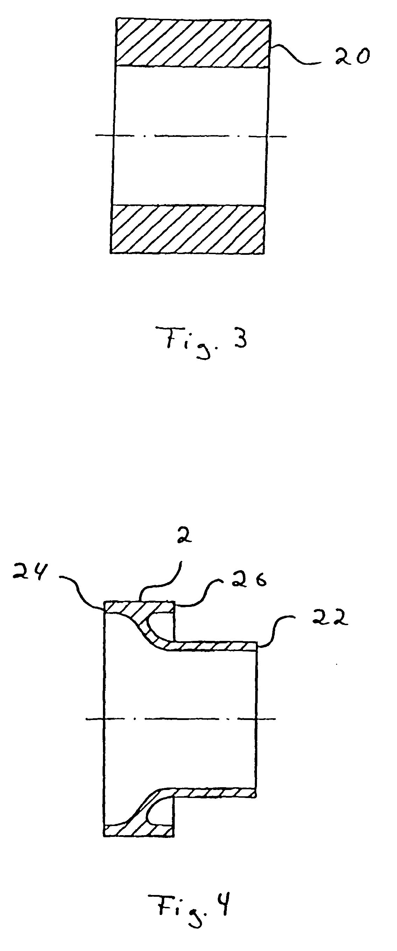

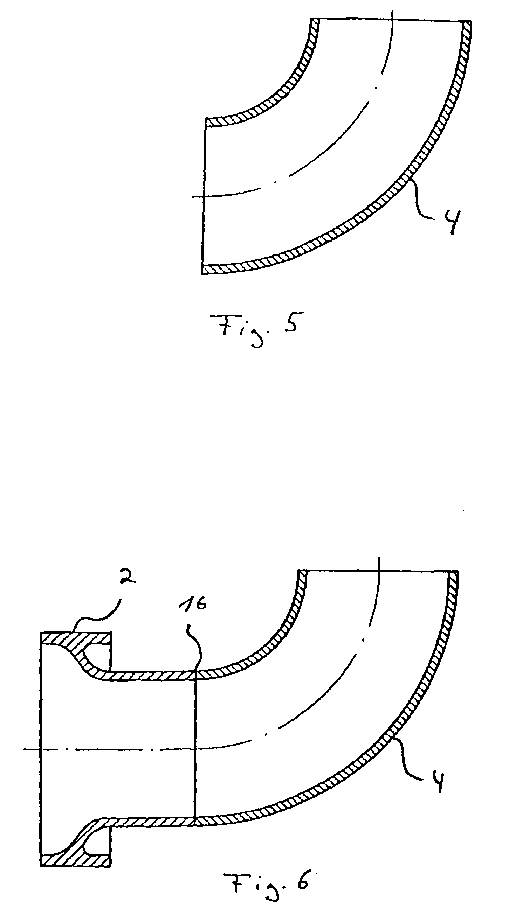

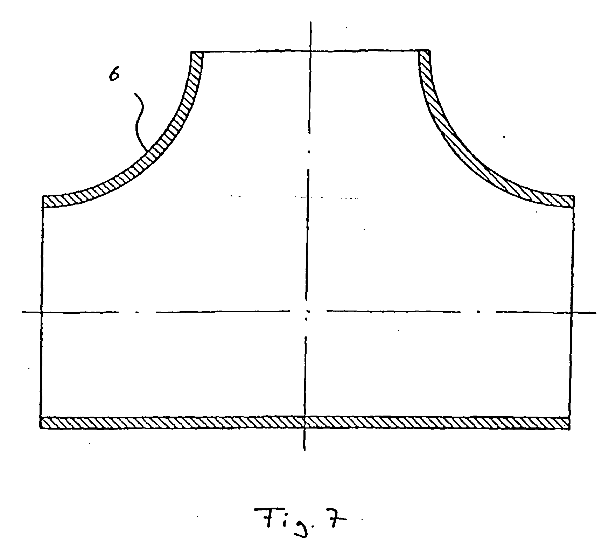

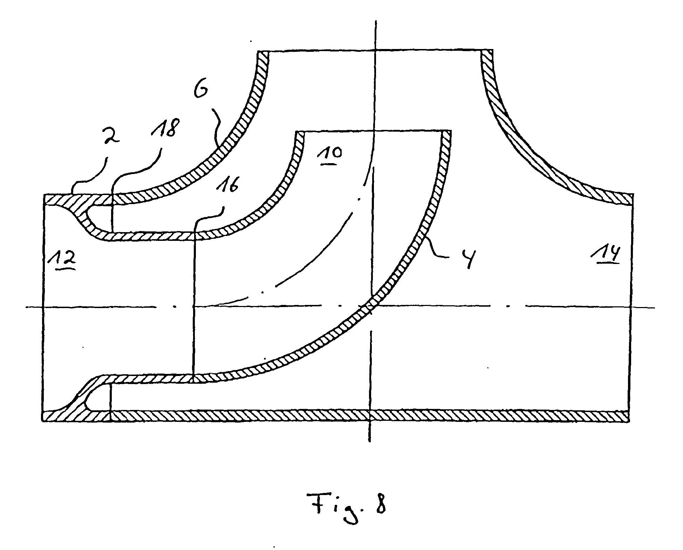

Im folgenden wird nun anhand der Figuren 3 bis 8 die Fertigung und Überprüfung der in Fig. 1 und 2 gezeigten Ventile beschrieben.

Das Reduzierstück 2 wird mittels Drehen, Fräsen, Schmieden, Pressen oder Feinguß aus einem Rohling 20 gefertigt, der ein Schmiederohling oder ein abgelängter Abschnitt eines Rohres sein kann. Dabei weist der Rohling 20 eine zylinderförmige Grundform mit einem zentralen Durchgang auf, so daß der Rohling 20 vor seiner weiteren Verarbeitung problemlos auf Fehlerfreiheit (Ungänzen) überprüft werden kann. Dabei kann die Überprüfung des Rohlings auf Fehlerfreiheit (Ungänzen) mittels Verfahren zur zerstörungsfreien Werkstoffprüfung, vorzugsweise durch eine Ultraschall-Volumenprüfung unter Verwendung eines Senkrechtprüfkopfes erfolgen.

In einem nächsten Schritt (siehe Fig. 4) wird aus dem Rohling 20 das Reduzierstück 2 mittels Drehen, Fräsen, Schmieden, Pressen oder Feinguß gefertigt. Dabei weist das Reduzierstück 2 in seiner endgültigen Form einen ersten und zweiten Anschlußabschnitt 24, 26 mit großem Durchmesser auf, die sich gegenüberliegen, und einen Anschlußabschnitt 22 mit kleinem Durchmesser auf. Der erste Anschlußabschnitt 24 mit dem großen Durchmesser bildet später den Eingang 12 des Ventils und kann mit einer Rohrleitung verbunden werden, während der zweite Anschlußabschnitt 26 mit großem Durchmesser dazu dient, eine Verbindung mit einem T-Stück 6 herzustellen. Der Anschlußabschnitt 22 mit dem kleinen Durchmesser dient zur Verbindung des T-Stücks 2 mit einem Krümmer 4. Dabei ist der Anschlußabschnitt 22 mit dem kleinen Durchmesser verlängert gegenüber dem zweiten Anschlußabschnitt 26 mit dem großen Durchmesser ausgebildet.

So kann die Verbindungsstelle 16 zwischen dem Anschlußabschnitt 22 mit dem kleinen Durchmesser des Reduzierstücks 2 mit dem Krümmer 4 durch Schweißen verbunden werden. Diese Schweißnaht im Bereich der Verbindungsstelle 16 ist leicht zugänglich und kann mittels Verfahren zur zerstörungsfreien Werkstoffprüfung, vorzugsweise durch eine Ultraschall-Volumenprüfung unter Verwendung eines Senkrechtprüfkopfes geprüft werden.

In einem nächsten Schritt wird der mit dem Reduzierstück 2 verbundene Krümmer 4 in das Innere des T-Stücks 6 derart eingeführt, daß es im Inneren des T-Stücks 6 angeordnet ist. Anschließend wird an der Verbindungsstelle 18 zwischen dem Reduzierstück 2 und dem Krümmer 4 mit dem T-Stück 6 durch Schweißen eine Verbindung zwischen den zweiten großen Durchmessern des Reduzierstücks 2 und dem T-Stück 6 hergestellt.

Dabei kann die Verbindungsstelle 18 zwischen dem Reduzierstück 2, dem Krümmer 4 und dem T-Stück 6 mittels Verfahren zur zerstörungsfreien Werkstoffprüfung, vorzugsweise durch eine Ultraschall-Volumenprüfung unter Verwendung eines Senkrechtprüfkopfes erfolgen, da die Verbindungsstelle 18 zum Reduzierstück 2 mit dem Krümmer 4 und dem T-Stück 6 leicht zugänglich ist.

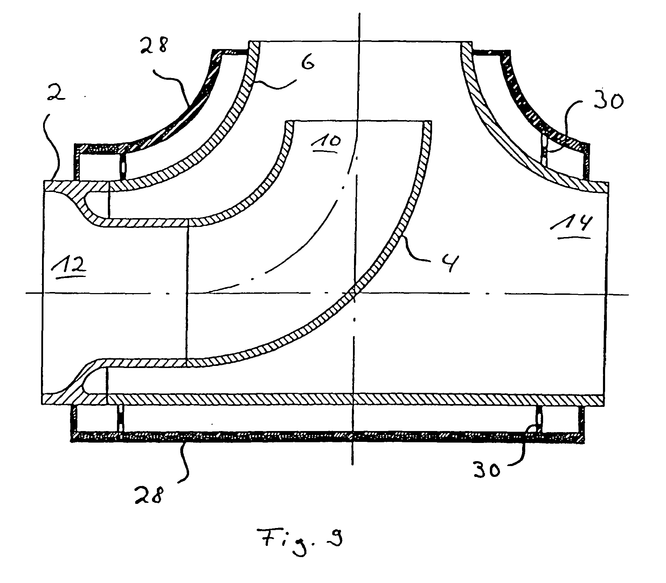

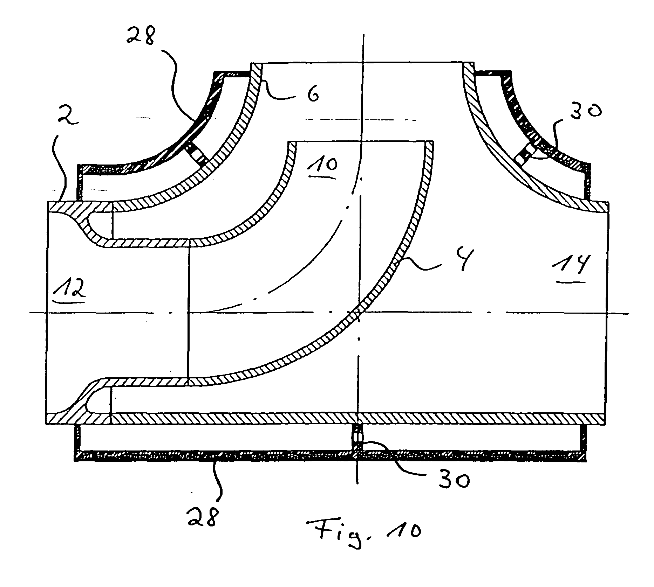

Es wird nun auf die Fig. 9 und 10 Bezug genommen.

In einem weiteren Schritt wird das Ventil mit einer Ummantelung 28 versehen, sodaß das Ventil doppelwandig ummantelt ausgebildet ist und der Zwischenraum zwischen dem Ventil und der doppelwandigen Ummantelung 28 auch auf Leckagen überwacht werden kann oder Raum für eine Vakuumisolierung gegeben ist. Dabei besteht die Ummantelung 28 aus zwei Hälften, die an das Ventil angefügt werden und entlang von Verbindungnähten verschweißt werden. Dabei weist die Ummantelung 28 eine Vielzahl von Stützen 30 auf, die der Befestigung und/oder Justierung an des Außenmantels des Ventils dienen.

Die Verbindungsnähte zwischen dem Teilen der Ummantelung 28 können mittels Verfahren zur zerstörungsfreien Werkstoffprüfung, vorzugsweise durch eine Ultraschall-Volumenprüfung unter Verwendung eines Senkrechtprüfkopfes überprüft werden, sodaß sichergestellt ist, daß auch die Schweißnähte der Ummantelung 28 fehlerfrei sind. Um die Überprüfung der Schweißnähte zu erleichtern, sind die Stützen 30 in Bezug zu den Schweißnähten derart angeordnet, daß die Schweißnähte zurückspringen und nicht im Bereich der Stützen 30 angeordnet sind.

Anschließend wird der Ventilkegel 8 mitsamt der Ventilsteuerung montiert, sodaß ein doppelwandiges Ventil für höchste Sicherheitsanforderungen zur Verfügung steht.

## Patentansprüche

1. verfahren zur Herstellung eines drucktragenden Bauteiles für Armaturen-, Pumpen-, Wärmetauscher-, Verteiler- oder Filtergehäuse, bestehend aus einem Reduzierstück (2), einem Krümmer (4) und einem gehäuseförmigen T-Stück (6), mit folgenden, zeitlich aufeinanderfolgenden Verfahrensschritten:
- Bereitstellen eines Krümmers (4), eines gehäuseförmigen T-Stückes sowie eines Rohlings (20) des Reduzierstücks (2)
- Überprüfen des Rohlings (20) auf Fehlerfreiheit durch ein Verfahren zur zerstörungsfreien Werkstoffprüfung
- spanende oder umformende Bearbeitung des Rohlings (20) unter Ausarbeitung des Reduzierstücks (2) mit wenigstens einem Anschlußabschnitt (24, 26) großen Durchmessers sowie einem Anschlußabschnitt (22) kleineren Durchmessers
- Verbindung des Anschlußabschnittes kleineren Durchmessers (22) des Reduzierstücks (2) mit dem Krümmer (4) und anschließend
- Verbinden des Anschlußabschnittes größeren Durchmessers (26) des Reduzierstückes (2) mit dem T-Stück.

2. Verfahren nach Anspruch 1, **dadurch gekennzeichnet, daß** der Rohling (20) ein Abschnitt eines Rohres oder ein Schmiederohling ist.

3. Verfahren nach Anspruch 1 oder 2, **dadurch gekennzeichnet, daß** das Reduzierstück (2) aus dem Rohling (20) mittels Drehen, Fräsen, Schmieden, Pressen oder Feinguß gefertigt wird.

4. Verfahren nach Anspruch 1, **dadurch gekennzeichnet, daß** an der Verbindungsstelle (16) zwischen dem Reduzierstück (2) und dem Krümmer (4) eine Schweißverbindung hergestellt wird.

5. Verfahren nach Anspruch 1 oder 4, **dadurch gekennzeichnet, daß** die Verbindungsstelle (16) mittels Verfahren zur zerstörungsfreien Werkstoffprüfung überprüft wird.

6. Verfahren nach Anspruch 1, **dadurch gekennzeichnet, daß** an einer Verbindungsstelle (18) zwischen dem Reduzierstück (2) und dem T-Stück (6) eine Schweißverbindung hergestellt wird.

7. verfahren nach Anspruch 6, **dadurch gekennzeichnet, daß** die Verbindungsstelle (18) mittels Verfahren zur zerstörungsfreien Werkstoffprüfung überprüft wird.

8. Verfahren nach einem der vorhergehenden Ansprüche, **dadurch gekennzeichnet, daß** das Reduzierstück (2), der Krümmer (4) oder das T-Stück (6) aus elektroschlackeumgeschmolzenem Material gefertigt wird.

9. Verfahren nach einem der vorhergehenden Ansprüche, **dadurch gekennzeichnet, daß** das Material des Reduzierstückes (2), des Krümmers (4) oder des T-Stückes (6) geschmiedet oder verpreßt wird.

10. Verfahren nach einem der vorhergehenden Ansprüche, **dadurch gekennzeichnet, daß** das drucktragende Bauteil mit einer Ummantelung (28) versehen wird.

11. verfahren nach Anspruch 10, **dadurch gekennzeichnet, daß** Verbindungsnähte der Ummantelung (28) mittels verfahren zur zerstörungsfreien Werkstoffprüfung überprüft werden.

12. Verfahren nach einem der vorhergehenden Ansprüche, **dadurch gekennzeichnet, daß** eine Ultraschall-Volumenprüfung durchgeführt wird.

13. Verfahren nach Anspruch 12, **dadurch gekennzeichnet, daß** zur Ultraschall-Volumenprüfung ein senkrechtprüfkopf verwendet wird.

## Claims

1. A method for the production of a pressure-bearing part for armatures, pumps, heat-exchangers, distributors or filter housings, consisting of a reducing piece (2), a bend (4) and a housing-shaped T-piece (6), with the following, consecutive method steps:
- providing a bend (4), a housing-shaped T-piece and a blank (20) of the reducing piece (2),
- testing the blank (20) for flaws by means of a method for non-destructive material testing,
- cutting or shaping the blank (20) by working the reducing piece (2) to have at least one connecting section (24, 26) with a greater diameter and a connecting section (22) with a smaller diameter,
- joining the connecting section of smaller diameter (22) of the reducing piece (2) with the bend (4) and afterwards
- connecting the connecting section of larger diameter (26) of the reducing piece (2) with the T-piece.

2. The method according to claim 1, **characterised in that** the blank (20) is a section of a pipe or a forging blank.

3. The method according to claim 1 or 2, **characterised in that** the reducing piece (2) is produced from the blank (20) by turning, milling, forging, pressing or precision casting.

4. The method according to claim 1, **characterised in that** a weld connection is produced at the connection point (16) between the reducing piece (2) and the bend (4).

5. The method according to claim 1 or 4, **characterised in that** the connection point (16) is tested by way of a method for non-destructive material testing.

6. The method according to claim 1, **characterised in that** a weld connection is produced at a connection point (18) between the reducing piece (2) and the T-piece (6).

7. The method according to claim 6, **characterised in that** the connection point (18) is tested by means of a method for non-destructive material testing.

8. The method according to one of the preceding claims, **characterised in that** the reducing piece (2), the bend (4) or the T-piece (6) is produced from electroslag-remelted material.

9. The method according to one of the preceding claims, **characterised in that** the material of the reducing piece (2), the bend (4) or the T-piece (6) is either forged or pressed.

10. The method according to one of the preceding claims, **characterised in that** the pressure-bearing part is provided with a coating (28).

11. The method according claim 10, **characterised in that** connection seams of the coating (28) are tested by means of a method for non-destructive material testing.

12. The method according to one of the preceding claims, **characterised in that** an ultrasonic volume test is performed.

13. The method according to claim 12, **characterised in that** a vertical probe is used for the ultrasonic volume test.

## Revendications

1. Procédé de fabrication d'un composant soumis à pression pour boîtier de robinet, de pompe, d'échangeur de chaleur, de répartiteur, ou de filtre, constitué d'une pièce de réduction (2), un coude (4)et une pièce en T formant un boîtier (6) comportant successivement les étapes suivantes :
- préparation d'un coude (4), d'une pièce en T formant un boîtier ainsi qu'une ébauche (20) de la pièce de réduction (2),
- contrôle de l'ébauche sur la présence de défauts par un procédé d'essais de matériau sans destruction de matériau,
- usinage par déformation ou enlèvement de matière de l'ébauche avec façonnage de la pièce de réduction (2) avec au moins une section de raccordement (24, 26) de grand diamètre ainsi que section de raccordement (22) de petit diamètre,
- raccordement de la section de raccordement (22) de petit diamètre de la pièce de réduction (2) avec le coude (4) et ensuite
- raccordement de la section de raccordement de grand diamètre avec la pièce en T.

2. Procédé selon la revendication 1, **caractérisé en ce que** l'ébauche (20) est une section d'un tube ou une ébauche de forge.

3. Procédé selon la revendication 1 ou 2, **caractérisé en ce que** la pièce de réduction (2) est fabriquée à partir de l'ébauche (20) par tournage, fraisage, forgeage, pressage ou moulage de précision.

4. Procédé selon la revendication 1, **caractérisé en ce qu'**une liaison par soudure est produite au point de liaison (16) entre la pièce de réduction (2) et le coude (4).

5. Procédé selon la revendication 1 ou 4, **caractérisé en ce que** le point de liaison (16) est contrôlé au moyen d'un procédé d'essais de matériau sans destruction de matériau.

6. Procédé selon la revendication 1, **caractérisé en ce qu'**une liaison par soudure est produite au point de liaison (18) entre la pièce de réduction (2) et la pièce en T.

7. Procédé selon la revendication 6, **caractérisé en ce que** le point de liaison (18) est contrôlé par un procédé d'essais de matériau sans destruction de matériau.

8. Procédé selon l'une des revendications précédentes, **caractérisé en ce que** la pièce de réduction (2), le coude (4) ou la pièce en T (6) sont fabriqués en un matériau de refusion de laitier électrique.

9. Procédé selon l'une des revendications précédentes, **caractérisé en ce que** le matériau de la pièce de réduction (2), du coude (4) ou de la pièce en T (6) est forgé ou pressé.

10. Procédé selon l'une des revendications précédentes, **caractérisé en ce que** le composant soumis à pression est pourvu d'une enveloppe (28).

11. Procédé selon la revendication 10, **caractérisé en ce que** les cordons de liaison de l'enveloppe (28) sont testés au moyen de procédés d'essais de matériau sans destruction de matériau.

12. Procédé selon l'une des revendications précédentes, **caractérisé en ce qu'**un test de volume aux ultrasons est effectué.

13. Procédé selon la revendication 12, **caractérisé en ce qu'**on utilise pour le test de volume aux ultrasons une tête de test verticale.
